# EUROPEAN PATENT SPECIFICATION

(11) **EP 1 540 886 B1**
(45) Date of publication and mention of the grant of the patent: **23.05.2012**
(21) Application number: 03771944.0
(22) Date of filing: 25.07.2003
(51) Int. Cl.: H04L 12/24, G06F 9/46, G06F 17/30

(54) **COMMAND PROCESSING IN A TELECOMMUNICATIONS NETWORK**
BEFEHLSVERARBEITUNG IN EINEM TELEKOMMUNIKATIONSNETZ
TRAITEMENT DE COMMANDES DANS UN RESEAU DE TELECOMMUNICATIONS

(30) Priority: 30.07.2002 US 209482; 30.07.2002 US 209124
(43) Date of publication of application: 15.06.2005
(73) Proprietor: Cisco Technology, Inc., San Jose, CA 95134-1706 (US)
(72) Inventor: BISHOP, Eddie, E., Jr., McKinney, TX 75071 (US); VANDER VOORD, Gerald, F., Plano, TX (US); BLANCHARD, Alfred, J., Plano, TX 75024 (US); HOMOLA, Charles, M., Allen, TX 75013 (US)
(74) Representative: Kazi, Ilya
(86) International application number: PCT/US2003/023496
(87) International publication number: WO 2004/012392

(56) References cited:
- EP-A- 1 077 405
- EP-A- 1 197 859
- US-A- 4 648 062
- US-A- 6 041 350
- US-A1- 2002 073 236
- US-A1- 2002 099 738
- SPEAKER L A: "A TOOLKIT FOR DEVELOPING TMN MANAGER/AGENT APPLICATIONS" HEWLETT-PACKARD JOURNAL, HEWLETT-PACKARD CO. PALO ALTO, US, vol. 47, no. 5, 1 October 1996 (1996-10-01), pages 52-61, XP000631666
- "Generic network information model; M.3100 (10/92)", ITU-T STANDARD, INTERNATIONAL TELECOMMUNICATION UNION, GENEVA ; CH, no. M.3100 (10/92), 5 October 1992 (1992-10-05), pages 1-96, XP017435195, [retrieved on 2007-07-02]
- "Information technology - Open Systems Interconnection - Structure of management information: Management information model; X.720 (01/92)", ITU-T STANDARD IN FORCE (I), INTERNATIONAL TELECOMMUNICATION UNION, GENEVA, CH, no. X.720 (01/92), 17 January 1992 (1992-01-17), XP017404143,

## Description

### TECHNICAL FIELD OF THE INVENTION

This invention relates generally to the field of telecommunications and more specifically to command processing in a telecommunications network.

### BACKGROUND OF THE INVENTION

Command processing is used to handle command requests within a system. Typically, command processing is associated with specific software applications. Such command processing, however, must be replaced or modified for use with different software applications. Consequently, previous techniques for command processing are unsatisfactory for some needs.

EP-A-1197859 describes a system that allows clients to remotely access and use a data processing object via a remote server on a computer network. In the system described, the remote server receives method execution requests already encoded in XML and these are processed to allow the user to interact with the data processing object.

US-A-6041350 describes a network management system which duplicates managed objects that have been generated by a network element management system, in order to manage the states of a number of network resources.

US-A-4648062 describes an on-line help system that provides interactive help information to users.

US-A-2002/0073236 discloses a method and system for managing data exchange among systems connected together via a computer network. The system uses a number of predefined stylesheets which each describe a mapping between the system's specific local format and the generic interchange format. When data objects are transmitted between two systems, the data object is translated from the first system's specific local format to the second system's specific local format, using the appropriate stylesheets.

US2002/0099738 describes a method and system for integrating back-end enterprise applications with Web clients. This may comprise a method for invoking an object, comprising the steps of generating a description of the interface of the object; generating metadata representing the interface of the object from the description; storing the metadata; generating a representation of an invocation of the object in a markup language from the metadata; transmitting the representation of the invocation to a client program configured to invoke the object by interpreting the representation; receiving an invocation from the client program; based on the metadata, interpreting the received invocation.

### SUMMARY OF THE INVENTION

According to a first aspect of the present invention there is provided a method for command processing, comprising: receiving from a requestor via a communication network an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
generating (52) an extensible markup language document from the received initial request;
extracting (54) the noun and verb combination from the extensible markup language document;
generating an executable request object according to the extracted noun and verb combination;
executing the generated request object;
creating a hash map of the parameters associated with the initial request;
passing the hash map to the request object for validation;
determining (58) a reply in response to the execution of the executable request object; and
transmitting (64) the reply to the requestor (22).

According to a second aspect of the present invention there is provided a system for command processing, comprising:
an interface servant (30) operable to receive from a requestor (22) via a communication network (24) an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
an adapter operable: i) to generate an extensible markup language document from the received initial request; and ii) to extract the noun and verb combination from the extensible markup language document;
a command processing infrastructure (34) operable: i) to generate an executable request object according to the extracted noun and verb combination; and ii) to execute the generated request object;
wherein the adapter (32) is operable to create a hash map of the parameters associated with the initial request and wherein the command processing infrastructure (34) is operable to pass the hash map to the request object for validation;
means for determining a reply in response to the execution of the executable request object; and
means (30) for transmitting the reply to the requestor (22).

According to a third aspect of the present invention there is provided a computer readable medium including code for command processing, the code being operable to cause a programmable computer device to:
receive (50) from a requestor (22) via a communication network (24) an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
generate (52) an extensible markup language document from the received initial request;
extract (54) the noun and verb combination from the extensible markup language document;
generate an executable request object according to the extracted noun and verb combination;
execute the generated request object;
create a hash map of the parameters associated with the initial request;
pass the hash map to the request object for validation;
determine (58) a reply in response to the execution of the request object; and
transmit (64) the reply to a requestor (22).

A technical advantage of one embodiment may include a command processing infrastructure that provides a managed object schema that describes a command. A requestor uses the managed object schema to formulate a request for the command. By providing the managed object schema to the requestor, the command processing infrastructure may be used with any of a number of software applications.

### BRIEF DESCRIPTION OF THE DRAWINGS

For a more complete understanding of the present invention and its features and advantages, reference is now made to the following description, taken in conjunction with the accompanying drawings, in which:
Figure 1 is a block diagram of one embodiment of a system for processing commands;
Figure 2 is a flowchart illustrating one embodiment of a method for command processing;
FIGURE 3 is a block diagram illustrating embodiments of a network operations center and of a CORBA interface servant of the system of FIGURE 1; and
FIGURE 4 is a block diagram illustrating embodiments of an XML adapter and a command processing infrastructure of the system of FIGURE 1.

### DETAILED DESCRIPTION OF THE DRAWINGS

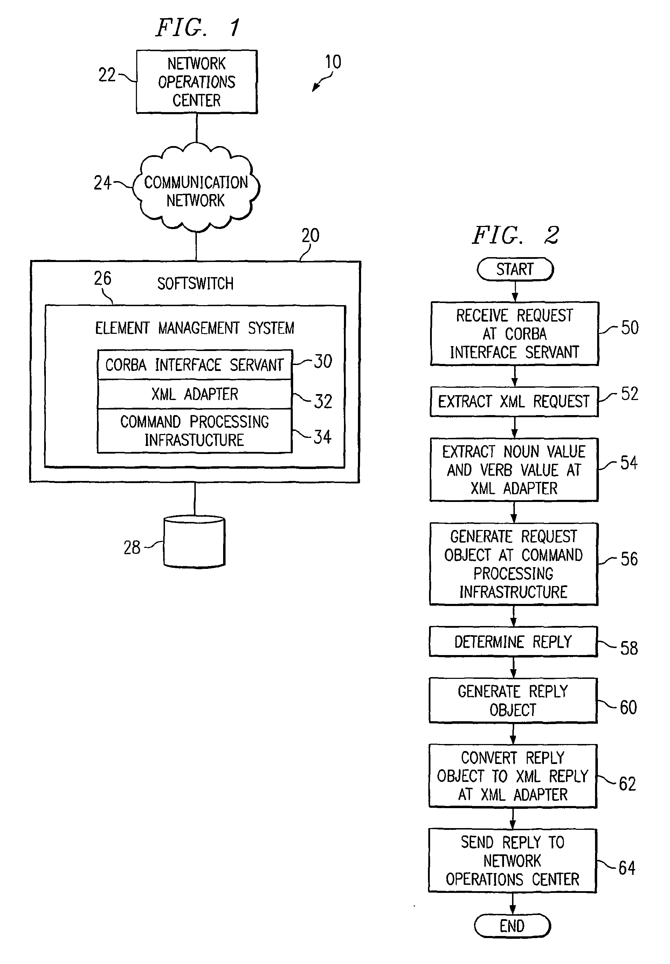

Embodiments of the present invention and its advantages are best understood by referring to FIGURES 1 through 4 of the drawings, like numerals being used for like and corresponding parts of the various drawings.

FIGURE 1 is a block diagram of one embodiment of a system 10 for processing commands. In general, system 10 includes a softswitch 20 with a generic infrastructure that processes requests received from a network operations center 22. The generic infrastructure may be combined with any of a number of adapters in order to process commands for any of a number of different software applications at network operations center 22.

In operation, system 10 provides network operations center 22 with a managed object that describes a command. Network operations center 22 generates a request in accordance with the managed object and sends the request to system 10 through a communication network 24. A common object request broker architecture (CORBA) interface servant 30 extracts an extensible markup language (XML) request from the request. An XML adapter 32 converts the XML request to a command processing infrastructure (CPI) request formatted in a CPI format that may be processed by a command processing infrastructure 34. Command processing infrastructure 34 generates a request object in accordance with the CPI request and accesses a database 28 to generate a reply object corresponding to the request object. An XML reply is generated according to the reply object, and is sent to network operations center 22.

According to one embodiment, network operations center 22 is responsible for management of a network. Network operations center 22 may submit a request for a command comprising a noun-verb combination and one or more parameters. The noun-verb combination includes a noun value and a verb value. The noun value defines an item on which an action is performed, and a verb value defines the action to perform on the item. For example, a request to add a subscriber may include the verb value "add" II and the noun value "subscriber". The parameters may be used to customize the command.

Communication network 24 coupled to network operations center 22 may comprise, for example, a public switched telephone network, a public or private data network, the Internet, a wireline or wireless network, a local, regional, or global communication network, other suitable communication links, or any combination of the preceding. It may be understood to one skilled in the art that system 10 may receive requests from any suitable communications node through any suitable network.

System 10 coupled to communication network 24 includes softswitch 20 and database 28. Softswitch 20 provides call control for establishing, maintaining, routing, and terminating voice calls, and may serve as an interface for enhanced service and application platforms. Softswitch 20 may comprise, for example, a CISCO BTS 10200 softswitch.

Softswitch 20 includes an element management system 26. Element management system 26 enables a user to plan, provision, configure, and monitor softswitch 20. A generic infrastructure of element management system 26 processes commands for data validation, data routing, and data storage. Element management system 26 includes CORBA interface servant 30, XML adapter 32, and command processing infrastructure 34. CORBA interface servant 30 provides location independent transport for XML documents such that network operations center 22 does not need to locate softswitch 20.

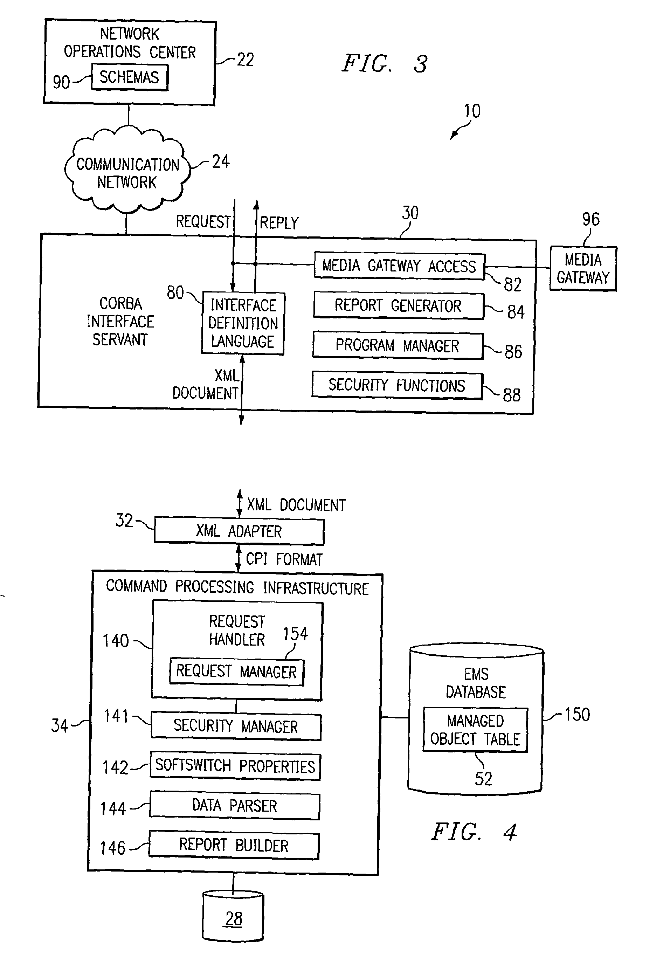

CORBA interface servant 30 receives a request from network operations center 22 and extracts an XML request from the request. CORBA interface servant may provide to network operations center 22 an interface definition language (IDL) that has a discrete set of functions to request command processing for any of a number of commands. The functions may include, for example, a get document function that retrieves any of a number of descriptions of commands that may be provided to network operations center 22, thus allowing a function to provide any of a number of commands. CORBA interface servant 30 is described in more detail with reference to FIGURE 3.

The illustrated system 10 includes CORBA interface servant 30 that serves as a CORBA adapter. One skilled in the art, however, will recognize that any suitable adapter may be used, for example, an hypertext transport protocol (HTTP) or a Java Messaging Service (JMS) adapter.

XML adapter 32 translates between data expressed in XML documents and data expressed in a CPI format that may be processed by command processing infrastructure 34. For example, XML adapter 32 generates an extensible markup language document from a managed object expressed in CPI format. The extensible markup language document is provided to network operations center 22. XML adapter 32 may also extract a noun-verb combination and parameters from an XML request and format the noun value, verb value, and parameters into a CPI request that may be processed by command processing infrastructure 34. XML adapter 32 generates a corresponding XML document that defines the element and attribute of the command. XML adapter 32 is described in more detail with reference to FIGURE 4.

Command processing infrastructure 34 comprises a generic infrastructure that provides for data validation, data routing, and data storage. Command processing infrastructure 34 builds a request object comprising a managed object from the noun value, verb value, and parameters extracted by XML adapter 32. Command processing infrastructure 34 accesses database 28 in order to generate a reply object comprising a managed object. Command processing infrastructure 34 may also validate data according to an object-oriented data parsing solution, route the data according to a defined manager for the data, and store the data in database 28. Command processing infrastructure 34 is described in more detail with reference to FIGURE 4. Database 28 stores provisioning and maintenance information. Database 28 may comprise, for example, an Oracle database, and may use a database driver such as a Java database connectivity (JDBC) driver.

Softswitch 20 may comprise other or additional modules without departing from the scope of the invention. For example, the functionality of XML adapter 32 and command processing infrastructure 34 may be combined into one module.

FIGURE 2 is a flowchart illustrating one embodiment of a method for command processing. The method begins at step 50, where CORBA interface servant 30 receives a request comprising a noun-verb combination from network operations center 22. The request may be generated according to a managed object provided to network operations center 22. CORBA interface servant 30 extracts an XML request comprising an XML document from the request at step 52, and sends the XML request to XML adapter 32. XML adapter 32 extracts the noun-verb combination from the XML request at step 54, and sends the noun value and verb value to command processing infrastructure 34.

Command processing infrastructure 34 generates a request object from the noun value and verb value at step 56. At step 58, command processing infrastructure 34 determines a reply to the request object by accessing database 28. A reply object is generated by command processing infrastructure 34 at step 60. XML adapter 32-converts the reply object to an XML reply at step 62. CORBA interface servant 30 sends the reply to network operations center 22 at step 64. After sending the reply to network operations center 22, the method terminates.

FIGURE 3 is a block diagram illustrating embodiments of network operations center 22 and of CORBA interface servant 30 of system 10 of FIGURE 1. Network operations center 22 stores schemas 90. Schemas 90 are provided for client side verification of XML document structure that may be used to submit a request or to report a reply.

Schemas 90 may include a managed object schema, a request schema, and a reply schema. A managed object schema describes a command and associated command parameters. For example, a managed object schema may describe a command to add a subscriber. A request schema is used to generate a request for a command. For example, a request schema is used to request the addition of a particular subscriber. A reply schema is used to report a reply to a request. For example, a reply schema is used to report the result of adding a particular subscriber.

A managed object schema defines a command and associated parameters. The managed object may, for example, provide information for managing the collection and validation of data at network operations center 22, dynamically building user input screens, or pre-validating user input.

A managed object schema may include an element, a managed object attribute, and other attributes comprising an identifier and a verb. The identifier represents an object on which some action is to be taken, and corresponds to the noun value of a request. The verb indicates the action to be taken on the object, and corresponds to the verb value of a request. For example, the identification may represent a subscriber and the verb may indicate adding, resulting in the managed object corresponding to adding a subscriber.

According to one embodiment, the managed object attribute may have sub-elements that describe command parameters. Sub-elements may include the following. A required sub-element indicates whether an element is required. A type sub-element defines whether the managed object attribute comprises a single value, multiple values, or text. A default sub-element defines a default value for the managed object attribute. A width sub-element defines the total field width of the data included in the managed object attribute. A help text sub-element provides a description of the managed object attribute. A label sub-element provides an alternate label to the actual parameter name. A permitted sub-element specifies possible values or ranges for the managed object attribute element.

A foreign key sub-element indicates a foreign key relationship of the managed object to another command. A parser sub-element defines the type of validation that is required. A JavaScript sub-element indicates a JavaScript that may perform validation. A regular expression sub-element defines the regular expression of the managed object attribute in character data format.

A request schema defines the structure of a request for a command. A request schema may comprise an XML document that has one element and attributes, and may include no, one, or more entry elements. The attributes may include the noun value and verb value of the request, which may be expressed as character data.

An entry element, which may be empty, may include attributes such as key and value attributes. A key attribute comprises an identifier value derived from a managed object attribute of the associated managed object. A value attribute comprises a client-derived value assigned to a key attribute. A key attribute may be required to conform to sub-elements of the managed object attribute from which the key-value combination is derived. The key attribute and the value attribute may be expressed as character data.

A reply schema defines the structure of returned data generated in response to a request. A reply may comprise elements such as status, reason, and data table elements. A status element may have a true value or a false value. A reason element indicates successful processing or provides a cause for an error in command processing.

A data table element includes data retrieved in response to a request. A data table element may include one or more row sub-elements. A row sub-element defines an item of data, and may include an attribute that defines a row identifier. The row identifier may comprise a sequential value based on the number of returned rows. Each row may include a column sub-element that includes an identifier attribute. The identifier attribute may comprise the same identifier as used in the managed object attribute. Additional or other schemas may be used without departing from the scope of the invention.

CORBA interface servant 30 includes an interface definition language (IDL) 80, a media gateway access 82, a report generator 84, a program manager 86, and a security module 88. Interface definition language 80 allows for command processing based on a well-formed and validated XML document. Interface definition language 80 provides functions to generate XML documents that correspond to requests. Functions may include a request function and a get document function. A request function may be used to perform a command such as "add subscriber." A get document function is used to retrieve a document that may, for example, include a managed object that describes how network operations center 22 may request a command.

According to one embodiment, interface definition language 80 may provide access control. Users may be required to log into CORBA interface servant 30 utilizing a login identifier such as a login name and password in order to create a user session with CORBA interface servant 30. Authorization and authentication of the user request may be conducted during the user session.

An XML document generated by interface definition language 80 may include a standard document or an extended document. The standard document describes a command and related parameters that are available for the command, and is accessed according to the noun-verb combination of the request. The extended document includes the same information as the standard document, but also includes foreign key information. When an extended document is constructed, elements are added to account for foreign key items in the command. The extended document may also traverse nested key associations.

Media gateway access 82 allows for requests to be received from a media gateway 96. The requests received from media gateway 96 need not follow an XML format defined by an XML schema. Media gateway access 82 translates the commands to a format that may be processed by interface definition language 80. Report generator 84 generates reports that describe the activity of CORBA interface servant 30. A report may describe, for example, the number of requests for XML description documents, the number of CORBA provisioning requests, or the number of requests from media gateway 26.

A program manager 86 manages the operation of CORBA interface servant 30. Security functions 88 manages access to CORBA interface servant 30. Security functions 88 may validate user names and passwords against a security database. Security functions 88 may generate a security key once a user has been validated. The security key is required for further transactions using corporate interface servant 30. If a user is idle for longer than a specified period of time, the security key is removed, resulting in a user time out. CORBA interface servant 30 may include additional or other modules without departing from the scope of the invention.

FIGURE 4 is a block diagram illustrating embodiments of XML adapter 32 and command processing infrastructure 34 of system 10 of FIGURE 1. In operation, XML adapter 32 converts an XML document into a CPI format by extracting a noun-verb combination. A request handler 140 builds a request object according to the noun-verb combination. Request handler 140 executes the request by sending the request object to an instance of a request manager 154. The instance is passed to a thread of request manager 154 for execution. A reply object is generated in response to execution of the request object.

According to one embodiment, XML adapter 32 provides an XML interface that converts XML documents into CPI formatted data and vice versa. During conversion, XML adapter 32 may extract a noun-verb combination from the XML request. XML adapter 32 may also create a hash map of parameters of the request and pass the hash map of parameters to the request object for validation.

According to one embodiment, CPI formatted data comprises Java classes that can be translated into XML document type definitions since XML supports objects and nested objects. The Java classes may include request, reply, and managed object Java classes. An XML representation of these classes forms the basis for using XML for processing requests.

Command processing infrastructure 34 includes request handler 140, a security manager 141, softswitch properties 142, a data parser 144, and a report builder 146. An EMS database 150 that stores a managed object table 152 is coupled to command processing infrastructure 34. Managed object table 152 stores managed objects.

Request handler 140 builds a request object according to a noun-verb combination of a request. Alternatively, a cached request may be used. The request object includes a request data object. Request handler 140 executes the request object by sending the request object to an instance of request manager 154. The instance is passed to a thread of request manager 154 for execution. A reply object is generated in response to execution of the request object. The execution of request data object yields a reply data table, which is inserted into the reply object. The request attempt may be logged in database 26, and the entry may be updated with a reply status. Request handler 140 may also perform security checks using security module 141 and basic command integrity checks.

Request manager 154 defines the basic subarchitecture for processing a command. A command is associated with request manager 154 and optionally a database table. If a command has special rules, request manager 154 may be extended to create a class to handle the special rules. Request manager 154 services a request and sends a message to a peer process to retrieve data. Request manager 154 may also have a set of verification methods for subclasses to override rules that are not handled by the managed object or by the database 26. Request manager 154 may also define a set of standard action methods such as methods that perform additions, changes, deletions, and showing of commands that map to managed object table 152.

Security manager 151 provides security operations Softswitch properties 142 stores configurable data, and may include, for example, default values, maximum or minimum values, or required values. Data parser 144 parses input information into parts that may be processed by command processing infrastructure 34. Data parser 144 may, for example, parse numerical or character values, identifiers such as Internet domain addresses or social security numbers, or codes such as SS7 point codes. Report builder 146 generates reports describing the performance of command processing infrastructure 34.

One skilled in the art will recognize that XML adapter 32 and command processing infrastructure 32 may include fewer, other, or additional modules without departing from the scope of the invention.

Certain embodiments of the invention may provide one or more technical advantages. A technical advantage of one embodiment may include a command processing infrastructure that provides a managed object schema that describes a command. A request may use the managed object schema to formulate a request for the command. By providing the managed object schema to the requestor, the command processing infrastructure may be used with any of a number of software applications. Another technical advantage of one embodiment may include an interface servant that has an interface definition language. The interface definition language allows any of a number of systems to request a command definition.

Although an embodiment of the invention and its advantages are described in detail, a person skilled in the art could make various alterations, additions, and omissions without departing from the scope of the present invention as defined by the appended claims.

## Claims

1. A method for command processing, comprising:
receiving (50) from a requestor (22) via a communication network (24) an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
generating (52) an extensible markup language document from the received initial request;
extracting (54) the noun and verb combination from the extensible markup language document;
generating an executable request object according to the extracted noun and verb combination;
executing the generated request object;
creating a hash map of the parameters associated with the initial request;
passing the hash map to the request object for validation;
determining (58) a reply in response to the execution of the executable request object; and
transmitting (64) the reply to the requestor (22).

2. The method of Claim 1, further comprising:
generating (60) a reply object in response to execution of the request object;
generating (62) an extensible markup language reply from the reply object;
providing (64) the extensible markup language reply to the requestor (22).

3. The method of Claim 1, wherein the request object is defined by a Java class.

4. The method of Claim 1, further comprising:
creating (56) a request data object in the request object;
producing a reply data table in response to execution of the request data object;
inserting the reply data table into the reply object.

5. The method of Claim 1, wherein the managed object schema is associated with a request schema and a reply schema, the request schema describing generation of the request, the reply schema describing reporting of the reply.

6. The method of claim 1 comprising providing the managed object schema corresponding to the command to the requestor (22).

7. A system (10) for command processing,
comprising:
an interface servant (30) operable to receive from a requestor (22) via a communication network (24) an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
an adapter operable: i) to generate an extensible markup language document from the received initial request; and ii) to extract the noun and verb combination from the extensible markup language document;
a command processing infrastructure (34) operable: i) to generate an executable request object according to the extracted noun and verb combination; and ii) to execute the generated request object;
wherein the adapter (32) is operable to create a hash map of the parameters associated with the initial request and wherein the command processing infrastructure (34) is operable to pass the hash map to the request object for validation;
means for determining a reply in response to the execution of the executable request object; and
means (30) for transmitting the reply to the requestor (22).

8. The system (10) of Claim 7, wherein the command processing infrastructure (34) is operable to generate a reply object in response to execution of the request object and wherein the adapter (32) is operable to generate an extensible markup language reply from the reply object and to provide the extensible markup language reply to the interface servant (30) for transport to the requestor (22).

9. The system (10) of Claim 7, wherein the request object is defined by a Java class.

10. The system (10) of Claim 8, wherein the command processing infrastructure (34) is operable to create a request data object in the request object and wherein the command processing infrastructure (34) is operable to produce a reply data table in response to execution of the
request data object and to insert the reply data table into the reply object.

11. The system (10) of Claim 7, wherein the managed object schema is associated with a request schema and a reply schema, the request schema describing generation of the request, the reply schema describing reporting of the reply.

12. The system (10) of Claim 7, comprising means for providing the managed object schema corresponding to the command to the requestor (22).

13. A computer readable medium including code for command processing, the code being operable to cause a programmable computer device to:
receive (50) from a requestor (22) via a communication network (24) an initial request for a command generated in accordance with a managed object schema, the initial request comprising a combination of a noun value corresponding to a noun and a verb value corresponding to a verb, the noun representing an item, the verb representing an action to perform on the item, wherein the initial request further comprises one or more parameters, each parameter comprising an element key and an element value, the element key identifying an element of the command, the element value representing a value corresponding to the element;
generate (52) an extensible markup language document from the received initial request;
extract (54) the noun and verb combination from the extensible markup language document;
generate an executable request object according to the extracted noun and verb combination;
execute the generated request object;
create a hash map of the parameters associated with the initial request;
pass the hash map to the request object for validation;
determine (58) a reply in response to the execution of the
request object;
and
transmit (64) the reply to a requestor (22).

14. The computer readable medium of Claim 13 wherein the code is further operable to cause a programmable computer device to:
generate (60) a reply object in response to execution of the request object;
generate (62) an extensible markup language reply from the reply object;
provide (64) the extensible markup language reply to the requestor (22).

15. The computer readable medium of Claim 13, wherein the code includes code to cause the programmable computer device to generate a request object that is defined by a Java class.

16. The computer readable medium of Claim 13, wherein the code is further operable to cause a programmable computer device to:
create (56) a request data object in the request object;
produce a reply data table in response to execution of the request data object; and
insert the reply data table into the reply object.

17. The computer readable medium of Claim 13, comprising code operable to cause a programmable computer device to provide the requestor (22) with said managed object schema corresponding to the command.

18. The computer readable medium of Claim 17, wherein the code includes code to cause the programmable computer device to provide a managed object schema that is associated with a request schema and a reply schema, the request schema describing generation of the request, the reply schema describing reporting of the reply.

## Patentansprüche

1. Verfahren zur Befehlsverarbeitung, das umfasst:
Empfangen (50), von einem Anfordernden (22) über ein Kommunikationsnetz (24), einer Anfangsanfrage nach einem Befehl, der gemäß einem verwalteten Objektschema erzeugt worden ist, wobei die Anfangsanfrage eine Kombination aus einem Nomenwert, der einem Nomen entspricht, und einem Verbwert, der einem Verb entspricht, enthält, wobei das Nomen ein Datenwort repräsentiert und das Verb eine für das Datenwort durchzuführende Aktion repräsentiert, wobei die Anfangsanfrage des Weiteren einen oder mehrere Parameter enthält, wobei jeder Parameter einen Elementschlüssel und einen Elementwert aufweist, wobei der Elementschlüssel ein Element des Befehls identifiziert, wobei der Elementwert einen Wert, der dem Element entspricht, repräsentiert;
Erzeugen (52) eines Extensible Markup Language Dokuments aus der empfangenen Anfangsanfrage;
Extrahieren (54) der Nomen- und Verb-Kombination aus dem Extensible Markup Language Dokument;
Erzeugen eines ausführbaren Anfrageobjekts gemäß der extrahierten Nomen- und Verb-Kombination;
Ausführen des erzeugten Anfrageobjekts;
Erzeugen einer Streuwerttabelle (hash map) der mit der Anfangsanfrage assoziierten Parameter;
Weiterleiten der Streuwerttabelle an das Anfrageobjekt zur Validierung;
Ermitteln (58) einer Antwort in Reaktion auf das Ausführen des ausführbaren Anfrageobjekts; und
Senden (64) der Antwort an den Anfordernden (22).

2. Verfahren nach Anspruch 1, das des Weiteren umfasst:
Erzeugen (60) eines Antwortobjekts in Reaktion auf das Ausführen des Anfrageobjekts;
Erzeugen (62) einer Extensible Markup Language Antwort aus dem Antwortobjekt;
Bereitstellen (64) der Extensible Markup Language Antwort für den Anfordernden (22).

3. Verfahren nach Anspruch 1, wobei das Anfrageobjekt von einer Java Klasse definiert wird.

4. Verfahren nach Anspruch 1, das des Weiteren umfasst:
Erzeugen (56) eines Anfragedatenobjekts in dem Anfrageobjekt;
Erzeugen einer Antwortdatentabelle in Reaktion auf das Ausführen des Anfragedatenobjekts;
Einfügen der Antwortdatentabelle in das Antwortobjekt.

5. Verfahren nach Anspruch 1, wobei das verwaltete Objektschema mit einem Anfrageschema und einem Antwortschema assoziiert ist, wobei das Anfrageschema das Erzeugen der Anfrage beschreibt und das Antwortschema das Berichten der Antwort beschreibt.

6. Verfahren nach Anspruch 1, das das Bereitstellen des verwalteten Objektschemas entsprechend dem Befehl für den Anfordernden (22) umfasst.

7. System (10) zur Befehlsverarbeitung, das aufweist:
einen Schnittstellen-Servant (30), der so betreibbar ist, dass er von einem Anfordernden (22) über ein Kommunikationsnetz (24) eine Anfangsanfrage nach einem Befehl empfängt, der gemäß einem verwalteten Objektschema erzeugt worden ist, wobei die Anfangsanfrage eine Kombination aus einem Nomenwert, der einem Nomen entspricht, und einem Verbwert, der einem Verb entspricht, enthält, wobei das Nomen ein Datenwort repräsentiert und das Verb eine für das Datenwort durchzuführende Aktion repräsentiert, wobei die Anfangsanfrage des Weiteren einen oder mehrere Parameter enthält, wobei jeder Parameter einen Elementschlüssel und einen Elementwert aufweist, wobei der Elementschlüssel ein Element des Befehls identifiziert, wobei der Elementwert einen Wert, der dem Element entspricht, repräsentiert;
einen Adapter, der so betreibbar ist, dass er: i) ein Extensible Markup Language Dokuments aus der empfangenen Anfangsanfrage erzeugt; und ii) die Nomen- und Verb-Kombination aus dem Extensible Markup Language Dokument extrahiert;
eine befehlsverarbeitende Infrastruktur (34), die so betreibbar ist, dass sie: i) ein ausführbares Anfrageobjekt gemäß der extrahierten Nomen- und Verb-Kombination erzeugt; und ii) das erzeugte Anfrageobjekt ausführt;
wobei der Adapter (32) so betreibbar ist, dass er eine Streuwerttabelle (hash map) der mit der Anfangsanfrage assoziierten Parameter erzeugt, und wobei die befehlsverarbeitende Infrastruktur (34) so betreibbar ist, dass sie die Streuwerttabelle an das Anfrageobjekt zur Validierung weiterleitet;
eine Einrichtung zum Ermitteln einer Antwort in Reaktion auf das Ausführen des ausführbaren Anfrageobjekts; und
eine Einrichtung (30) zum Senden der Antwort an den Anfordernden (22).

8. System (10) nach Anspruch 7, wobei die befehlsverarbeitende Infrastruktur (34) so betreibbar ist, dass sie ein Antwortobjekt in Reaktion auf das Ausführen des Anfrageobjekts erzeugt, und wobei der Adapter (32) so betreibbar ist, dass er eine Extensible Markup Language Antwort aus dem Antwortobjekt erzeugt und die Extensible Markup Language Antwort für den Schnittstellen-Servant (30) zur Weiterleitung an den Anfordernden (22) bereitstellt.

9. System (10) nach Anspruch 7, wobei das Anfrageobjekt von einer Java-Klasse definiert wird.

10. System (10) nach Anspruch 8, wobei die befehlsverarbeitende Infrastruktur (34) so betreibbar ist, dass sie ein Anfragedatenobjekt im Anfrageobjekt erzeugt, und wobei die befehlsverarbeitende Infrastruktur (34) so betreibbar ist, dass sie eine Antwortdatentabelle in Reaktion auf das Ausführen des Anfragedatenobjekts erzeugt und die Antwortdatentabelle in das Antwortobjekt einfügt.

11. System (10) nach Anspruch 7, wobei das verwaltete Objektschema mit einem Anfrageschema und einem Antwortschema assoziiert ist, wobei das Anfrageschema das Erzeugen der Anfrage beschreibt und das Antwortschema das Berichten der Antwort beschreibt.

12. System (10) nach Anspruch 7, das eine Einrichtung zum Bereitstellen des verwalteten Objektschemas entsprechend dem Befehl für den Anfordernden (22) aufweist.

13. Computerlesbares Medium, das Code zur Befehlsverarbeitung enthält, wobei der Code so betreibbar ist, dass er eine programmierbare Computervorrichtung veranlasst zum:
Empfangen (50), von einem Anfordernden (22) über ein Kommunikationsnetz (24), einer Anfangsanfrage nach einem Befehl, der gemäß einem verwalteten Objektschema erzeugt worden ist, wobei die Anfangsanfrage eine Kombination aus einem Nomenwert, der einem Nomen entspricht, und einem Verbwert, der einem Verb entspricht, enthält, wobei das Nomen ein Objekt repräsentiert und das Verb eine für das Objekt durchzuführende Aktion repräsentiert, wobei die Anfangsanfrage des Weiteren einen oder mehrere Parameter enthält, wobei jeder Parameter einen Elementschlüssel und einen Elementwert aufweist, wobei der Elementschlüssel ein Element des Befehls identifiziert, wobei der Elementwert einen Wert, der dem Element entspricht, repräsentiert;
Erzeugen (52) eines Extensible Markup Language Dokuments aus der empfangenen Anfangsanfrage;
Extrahieren (54) der Nomen- und Verb-Kombination aus dem Extensible Markup Language Dokument;
Erzeugen eines ausführbaren Anfrageobjekts gemäß der extrahierten Nomen- und Verb-Kombination;
Ausführen des erzeugten Anfrageobjekts;
Erzeugen einer Streuwerttabelle (hash map) der mit der Anfangsanfrage assoziierten Parameter;
Weiterleiten der Streuwerttabelle an das Anfrageobjekt zur Validierung;
Ermitteln (58) einer Antwort in Reaktion auf das Ausführen des ausführbaren Anfrageobjekts; und
Senden (64) der Antwort an einen Anfordernden (22).

14. Computerlesbares Medium nach Anspruch 13, wobei der Code des Weiteren so betreibbar ist, dass er eine programmierbare Computervorrichtung veranlasst zum:
Erzeugen (60) eines Antwortobjekts in Reaktion auf das Ausführen des Anfrageobjekts;
Erzeugen (62) einer Extensible Markup Language Antwort aus dem Antwortobjekt;
Bereitstellen (64) der Extensible Markup Language Antwort für den Anfordernden (22).

15. Computerlesbares Medium nach Anspruch 13, wobei der Code Code aufweist zum Veranlassen, dass die programmierbare Computervorrichtung ein Anfrageobjekt erzeugt, das von einer Java-Klasse definiert wird.

16. Computerlesbares Medium nach Anspruch 13, wobei der Code des Weiteren so betreibbar ist, dass er eine programmierbare Computervorrichtung veranlasst zum:
Erzeugen (56) eines Anfragedatenobjekts in dem Anfrageobjekt;
Erzeugen einer Antwortdatentabelle im Ansprechen auf das Ausführen des Anfragedatenobjekts; und
Einfügen der Antwortdatentabelle in das Antwortobjekt

17. Computerlesbares Medium nach Anspruch 13, das Code enthält, der so betreibbar ist, dass er eine programmierbare Computervorrichtung veranlasst zum Bereitstellen des verwalteten Objektschemas entsprechend dem Befehl für den Anfordernden (22).

18. Computerlesbares Medium nach Anspruch 17, wobei der Code Code aufweist, um die programmierbare Computervorrichtung zu veranlassen zum Bereitstellen eines verwalteten Objektschemas, das mit einem Anfrageschema und einem Antwortschema assoziiert ist, wobei das Anfrageschema das Erzeugen der Anfrage beschreibt und das Antwortschema das Berichten der Antwort beschreibt.

## Revendications

1. Procédé de traitement de commande, comprenant les étapes consistant à :
Recevoir (50) d'un demandeur (22) via un réseau de télécommunications (24) une demande initiale d'une commande générée conformément à un schéma d'objet géré, la demande initiale comprenant une combinaison d'une valeur de nom correspondant à un nom et d'une valeur de verbe correspondant à un verbe, le nom représentant un article, le verbe représentant une action à réaliser sur l'article, dans lequel la demande initiale comprend en outre un ou plusieurs paramètres, chaque paramètre comprenant une clé d'élément et une valeur d'élément, la clé d'élément identifiant un élément de la commande, la valeur d'élément représentant une valeur correspondant à l'élément ;
générer (52) un document en langage de balisage extensible à partir de la demande initiale reçue ;
extraire (54) la combinaison de nom et de verbe du document en langage de balisage extensible ;
générer un objet de demande exécutable selon la combinaison de nom et de verbe extraite ;
exécuter l'objet de demande généré ;
créer une carte de hachage des paramètres associés à la demande initiale ;
passer la carte de hachage à l'objet de demande pour Validation ;
déterminer (58) une réponse en réponse à l'exécution de l'objet de demande exécutable ; et
transmettre (64) la réponse au demandeur (22).

2. Procédé selon la revendication 1, comprenant en outre les étapes consistant à :
générer (60) un objet de réponse en réponse à l'exécution de l'objet de demande ;
générer (62) une réponse en langage de balisage extensible à partir de l'objet de réponse ;
fournir (64) la réponse en langage de balisage extensible au demandeur (22).

3. Procédé selon la revendication 1, dans lequel l'objet de demande est défini par une classe Java.

4. Procédé selon la revendication 1, comprenant en outre les étapes consistant à :
créer (56) un objet de données de demande dans l'objet de demande ;
produire une table de données de réponse en réponse à l'exécution de l'objet de données de demande ;
insérer la table de données de réponse dans l'objet de réponse.

5. Procédé selon la revendication 1, dans lequel le schéma d'objet géré est associé à un schéma de demande et un schéma de réponse, le schéma de demande décrivant la génération de la demande, le schéma de réponse décrivant l'annonce de la réponse.

6. Procédé selon la revendication 1, comprenant la fourniture du schéma d'objet géré correspondant à la commande au demandeur (22).

7. Système (10) de traitement de commande, comprenant :
un serveur d'interface (30) utilisable pour recevoir d'un demandeur (22) via un réseau de télécommunications (24) une demande initiale d'une commande générée conformément à un schéma d'objet géré, la demande initiale comprenant une combinaison d'une valeur de nom correspondant à un nom et d'une valeur de verbe correspondant à un verbe, le nom représentant un article, le verbe représentant une action à réaliser sur l'article, dans lequel la demande initiale comprend en outre un ou plusieurs paramètres, chaque paramètre comprenant une clé d'élément et une valeur d'élément, la clé d'élément identifiant un élément de la commande, la valeur d'élément représentant une valeur correspondant à l'élément ;
un adaptateur utilisable pour : i) générer un document en langage de balisage extensible à partir de la demande initiale reçue ; et ii) extraire la combinaison de nom et de verbe du document en langage de balisage extensible ;
une infrastructure de traitement de commande (34) utilisable pour : i) générer un objet de demande exécutable selon la combinaison de nom et de verbe extraite ; et ii) exécuter l'objet de demande généré ;
dans lequel l'adaptateur (32) est utilisable pour créer une carte de hachage des paramètres associés à la demande initiale et dans lequel l'infrastructure de traitement de commande (34) est utilisable pour passer la carte de hachage à l'objet de demande pour Validation ;
un moyen de détermination d'une réponse en réponse à l'exécution de l'objet de demande exécutable ; et
un moyen (30) de transmission de la réponse au demandeur (22).

8. Système (10) selon la revendication 7, dans lequel l'infrastructure de traitement de commande (34) est utilisable pour générer un objet de réponse en réponse à l'exécution de l'objet de demande et dans lequel l'adaptateur (32) est utilisable pour générer une réponse en langage de balisage extensible à partir de l'objet de réponse et pour fournir la réponse en langage de balisage extensible au serveur d'interface (30) pour le transport au demandeur (22).

9. Système (10) selon la revendication 7, dans lequel l'objet de demande est défini par une classe Java.

10. Système (10) selon la revendication 8, dans lequel l'infrastructure de traitement de commande (34) est utilisable pour créer un objet de données de demande dans l'objet de demande et dans lequel l'infrastructure de traitement de commande (34) est utilisable pour produire une table de données de réponse en réponse à l'exécution de l'objet de données de demande et pour insérer la table de données de réponse dans l'objet de réponse.

11. Système (10) selon la revendication 7, dans lequel le schéma d'objet géré est associé à un schéma de demande et un schéma de réponse, le schéma de demande décrivant la génération de la demande, le schéma de réponse décrivant l'annonce de la réponse.

12. Système (10) selon la revendication 7, comprenant un moyen de fourniture du schéma d'objet géré correspondant à la commande au demandeur (22).

13. Support lisible par ordinateur comprenant un code pour le traitement de commande, le code étant utilisable pour amener un dispositif informatique programmable à :
recevoir (50) d'un demandeur (22) via un réseau de télécommunications (24) une demande initiale d'une commande générée conformément à un schéma d'objet géré, la demande initiale comprenant une combinaison d'une valeur de nom correspondant à un nom et d'une valeur de verbe correspondant à un verbe, le nom représentant un article, le verbe représentant une action à réaliser sur l'article, dans lequel la demande initiale comprend en outre un ou plusieurs paramètres, chaque paramètre comprenant une clé d'élément et une valeur d'élément, la clé d'élément identifiant un élément de la commande, la valeur d'élément représentant une valeur correspondant à l'élément ;
générer (52) un document en langage de balisage extensible à partir de la demande initiale reçue ;
extraire (54) la combinaison de nom et de verbe du document en langage de balisage extensible ;
générer un objet de demande exécutable selon la combinaison de nom et de verbe extraite ;
exécuter l'objet de demande généré ;
créer une carte de hachage des paramètres associés à la demande initiale ;
passer la carte de hachage à l'objet de demande pour Validation ;
déterminer (58) une réponse en réponse à l'exécution de l'objet de demande ; et
transmettre (64) la réponse à un demandeur (22).

14. Support lisible par ordinateur selon la revendication 13, dans lequel le code est en outre utilisable pour amener un dispositif informatique programmable à :
générer (60) un objet de réponse en réponse à l'exécution de l'objet de demande ;
générer (62) une réponse en langage de balisage extensible à partir de l'objet de réponse ;
fournir (64) la réponse en langage de balisage extensible au demandeur (22).

15. Support lisible par ordinateur selon la revendication 13, dans lequel le code comprend un code pour amener le dispositif informatique programmable à générer un objet de demande qui est défini par une classe Java.

16. Support lisible par ordinateur selon la revendication 13, dans lequel le code est en outre utilisable pour amener un dispositif informatique programmable à :
créer (56) un objet de données de demande dans l'objet de demande ;
produire une table de données de réponse en réponse à l'exécution de l'objet de données de demande ; et
insérer la table de données de réponse dans l'objet de réponse.

17. Support lisible par ordinateur selon la revendication 13, comprenant un code utilisable pour amener un dispositif informatique programmable à fournir au demandeur (22) ledit schéma d'objet géré correspondant à la commande.

18. Support lisible par ordinateur selon la revendication 17, dans lequel le code comprend un code pour amener le dispositif informatique programmable à fournir un schéma d'objet géré qui est associé à un schéma de demande et un schéma de réponse, le schéma de demande décrivant la génération de la demande et le schéma de réponse décrivant l'annonce de la réponse.
